# EUROPÄISCHE PATENTSCHRIFT

(11) **EP 1 059 717 B1**
(45) Veröffentlichungstag und Bekanntmachung des Hinweises auf die Patenterteilung: **02.01.2004**
(21) Anmeldenummer: 00110683.0
(22) Anmeldetag: 19.05.2000
(51) Int. Cl.: H02G 3/12

(54) **Gerätekombination für Geräteeinbaukanäle**
Device combination for installation in trunking assemblies
Combinaison d'appareils pour emboîtement dans des goulottes d'alimentation

(30) Priorität: 29.05.1999 DE 29909366 U
(43) Veröffentlichungstag der Anmeldung: 13.12.2000
(73) Patentinhaber: Tehalit GmbH & Co. KG, 67716 Heltersberg (DE)
(72) Erfinder: Schnurr, Richard, 66957 Vinningen (DE); Kauf, Peter, Dipl.-Ing., 66482 Zweibrücken (DE); Schneckmann, Horst, 67705 Trippstadt (DE); Schmitt, Erwin, 67659 Kaiserslautern (DE)
(74) Vertreter: Patentanwälte Möll und Bitterich

(56) Entgegenhaltungen:
- EP-A- 0 391 713
- EP-A- 0 844 714
- DE-A- 2 946 841

## Beschreibung

Die Erfindung betrifft Gerätekombinationen für Geräteeinbaukanäle gemäß dem Oberbegriff des Anspruchs 1 (Siehe EP-A-0 391 713 und EP-A-0 844 714).

Leitungsführungskanäle, die so konzipiert sind, daß elektrische Installationsgeräte wie Steckdosen, Schalter, Femsteuermodule usw. eingebaut werden können, werden als Geräteeinbaukanäle bezeichnet. Geräteeinbaukanäle werden seit Jahrzehnten weltweit in großen Stückzahlen in den unterschiedlichsten Ausgestaltungen produziert und verarbeitet. Bei der Herstellung sind sowohl technische als auch ästhetische Gesichtspunkte zu beachten. Technisch gesehen muss die Verbindung zwischen Kanal und Installationsgerät ausreichend stabil sein, damit die Kräfte, die beispielsweise beim Einstecken und insbesondere Herausziehen von Steckern in bzw. aus Starkstromsteckdosen auftreten, schadlos aufgenommen werden können. Des weiteren muss die elektrische Sicherheit für den Benutzer garantiert werden. Schließlich sollen die Installationsgeräte leicht zugänglich sein und einen ästhetisch gefälligen Anblick bieten.

Aus der EP-A-0 240 916 ist ein Installationsgerät für Leitungsführungskanäle bekannt, welches die oben genannten Bedingungen bereits teilweise erfüllt. Das Installationsgerät ist eine Starkstrom-Doppelsteckdose, welche mit Hilfe eines von vorne zu betätigenden Verschlusses direkt an der Rückwand des Kanalunterteils lösbar verankert werden kann. An den Stirnseiten angebrachte Anschlussräume ermöglichen den beidseitigen Anschluss von elektrischen Kabeln. Für die Ästhetik ist eine spezielle Abdeckblende vorgesehen, die auf das Installationsgerät aufgerastet wird und die offene Vorderseite des Kanalunterteils im Bereich des Installationsgerätes verschließt. An der Blende ist eine Klappe angelenkt, die im aufgeklappten Zustand den Zugang zum Installationsgerät freigibt, im zugeklappten Zustand dagegen das Installationsgerät abdeckt

Bei dieser vorbekannten Konstruktion ist noch unbefriedigend, daß es nicht möglich ist, mehrere Installationsgeräte lückenlos anzureihen. Des weiteren stehen Abdeckblende und insbesondere Abdeckklappe weit vor.

Der vorliegenden Erfindung liegt daher die Aufgabe zugrunde, eine Geräteeinbaukombination der eingangs genannten Art anzugeben, die einen geschützten, flachen und lückenlosen Einbau der Installationsgeräte ermöglicht.

Diese Aufgabe wird durch eine Geräteeinbaukombination mit den Merkmalen des Anspruchs 1 gelöst.

Dank des Multifunktionshalters wird das Elektroinstallationsgerät nicht mehr am Boden des Geräteeinbaukanals befestigt, sondern an einem Multifunktionshalter. Dadurch verschwindet das Elektroinstallationsgerät vollständig im Inneren des Kanals. Handelt es sich um eine Steckdose, so verschwindet auch ein eingesteckter Stecker im Kanal, und die Außenfront des Geräteeinbaukanals bleibt im wesentlichen glatt. Die elektrische Sicherheit für die Kanalbenutzer wird durch die Abdeckmulde garantiert, die den für den Benutzer zugänglichen Raum im Kanal begrenzt.

Gemäß einer vorteilhaften Weiterbildung der Erfindung ist die das Installationsgerät haltende Front des Multifunktionshalters schräg gestellt. Dadurch ist der Zugang zu dem Installationsgerät, beispielsweise zu der Steckdose, erleichtert, ohne dass die Kanalfront verändert wird.

Gemäß einer Ausgestaltung der Erfindung ist am Kopf des Multifunktionshalters ein Deckelhalteprofil vorgesehen. Dieses erlaubt die sichere Befestigung der Deckel bei Geräteeinbaukanälen, deren Unterteil mit mehr als einem Deckel, typischerweise drei Deckeln, verschlossen wird.

Vorzugsweise sind am Kopf des Multifunktionshalters Scharniere vorgesehen, die mit dem Klappdeckel korrespondieren. Dadurch können die bisher verwendeten gesonderten Rahmen entfallen. Des weiteren kann am Multifunktionshalter eine Kabelrückhalteleiste angeordnet sein. Diese Leiste kann auch weitere Aufgaben übemehmen; beispielsweise lassen sich daran Zusatzteile befestigen.

Gemäß einer bevorzugten Ausgestaltung der Erfindung besitzt die Mulde abnehmbare Seitenwände. Sind die Seitenwände abgenommen, lassen sich mehrere Mulden und mit diesen mehrere Installationsgeräte lücken- und abstandslos nebeneinander montieren. Auf diese Weise ergibt sich eine Geräteanordnung, die sowohl technisch als auch ästhetisch alle Ansprüche erfüllt.

Vorteilhafterweise ist die Mulde bzw. deren Seitenwand mit einer Schnittkaschierung versehen, die den angrenzenden Kanaldeckel überdeckt.

Es versteht sich, dass Abdeckmulde und Klappdeckel so aufeinander abgestimmt sind, dass auch dann, wenn ein Stecker mit Kabel in die Kanalsteckdose eingesteckt ist, die Einheitlichkeit der Front nicht gestört wird. Dies bedeutet dass zwischen Kanalunterteil und Klappdeckel ein entsprechender Spalt bestehen muss. Um nun zu verhindern, dass hier Staub und Schmutz eindringen, ist gemäß einer Weiterbildung der Erfindung an der Mulde eine Begrenzungsleiste mit Ausschnitten für die Steckerkabel vorgesehen.

Zur Befestigung des Elektroinstallationsgerätes am Multifunktionshalter ist vorzugsweise ein Langschlitz als Halteelement vorgesehen, der mit einem drehbaren Riegelelement am Boden des Installationsgerätes korrespondiert.

Um den Zugang zu dem am Multifunktionshalter befestigten Installationsgerät zu verbessern, empfiehlt sich eine Schrägstellung der Front des Installationsgerätes bzw. des Multifunktionshalters selbst.

Es versteht sich, dass die Vorrichtungen, die der Befestigung des jeweiligen Installationsgerätes am Multifunktionshalter dienen, und die Befestigungsvorrichtungen am Installationsgerät selbst aufeinander abgestimmt sein müssen.

Gemäß einer ersten Ausgestaltung der Erfindung dient als Halteelement ein Langschlitz am Multifunktionshalter, der mit einem Riegelelement am Boden des Installationsgerätes korrespondiert. Diese Konstruktion empfiehlt sich in erster Linie für die Montage von Starkstromgeräten.

Vorteilhafterweise sind am Fixteil des Multifunktionshalters spezielle Auflageflächen vorgesehen, auf denen sich das Installationsgerät abstützt.

Zur leichten Verbindung zwischen Installationsgerät und Abdeckmulde können am Installationsgerät Rastvertiefungen, an der Mulde damit korrespondierende Rastnasen vorgesehen sein. Diese Maßnahme beschleunigt die Montage auf der Baustelle.

Gemäß einer weiteren Ausgestaltung der Erfindung ist am Multifunktionshalter eine Geräteeinbaudose einstückig angeformt. In diese Geräteeinbaudose können dann die Elektro-Installationsgeräte wie an sich bekannt eingesetzt werden. Aufgrund der einstückigen Ausführung geht die Montage jedoch sehr viel schneller.

Gemäß einer Weiterbildung hierzu besitzt die Geräteeinbaudose keine Vorderwand. Diese Montageart empfiehlt sich insbesondere für die Verwendung von Schwachstrom-Installationsgeräten. Sie hat den Vorteil, dass die Anschlussklemmen an der Front des Installationsgerätes optimal zugänglich sind.

Zur Begrenzung des Kanalraumes, der dem Benutzer zugänglich ist, ist auch hier eine Mulde vorgesehen. In diesem Fall ist die Mulde jedoch so ausgeführt, dass sie das Installationsgerät überdeckt und den Zugang zu den Funktionsteilen des Installationsgerätes nur durch eine Öffnung freigibt. Diese Version der Mulde ist insbesondere von Vorteil, wenn die einstückig angebaute Geräteeinbaudose keine Vorderwand besitzt.

Gemäß einer Weiterbildung der Erfindung können am Boden der Geräteeinbaudose oder auch an deren Seitenwänden erste und zweite Konsolen vorgesehen sein, die eine Schraubbefestigung des Installationsgerätes ermöglichen, und zwar entweder parallel zum Boden oder im Winkel dazu.

Zur Befestigung von Installationsgeräten, die mit einem Bajonett ausgerüstet sind, können geeignete Schlitze in den Seitenwänden der Geräteeinbaudose vorgesehen werden.

Seitlich an den Seitenwänden der Dose angeformte Schürzen verdecken bei geöffneter Mulde den Multifunktionshalter und verhindern so den unbefugten Zugang zu dessen Befestigungselementen.

Für eine einwandfreie und saubere Verlegung der Leitungen und Kabel von und zu dem Elektro-Installationsgerät sind am Boden der Dose geeignete Führungen und Halterungen vorgesehen.

Ein Ausschnitt in der Mulde erlaubt das Anbringen von Kennzeichnungen, beispielsweise von Beschriftungen.

Gemäß einer bevorzugten Ausgestaltung der Erfindung besitzen Klappdeckel und Mulde identische Breiten. Dies vereinfacht die lückenlose Anreihung mehrerer Installationsgeräte.

Anhand der Zeichnung soll die Erfindung in Form eines Ausführungsbeispiels näher erläutert werden. Es zeigen
- Fig. 1: eine perspektivische Darstellung eines Geräteeinbaukanals mit eingesetztem ersten Installationsgerät,
- Fig. 2: eine Frontsicht des Geräteeinbaukanals der Fig. 1 mit geöffnetem Klappdeckel,
- Fig. 3: eine Seitenansicht des Geräteeinbaukanals der Fig. 2,
- Fig. 4: eine perspektivische Ansicht der Vorderseite eines Multifunktionshalters,
- Fig. 5: eine perspektivische Ansicht der Rückseite des Multifunktionshalters der Fig. 4,
- Fig. 6: einen Querschnitt durch den Multifunktionshalter der Fig. 4 und 5 mit aufgesetztem Installationsgerät,
- Fig. 7: eine perspektivische Darstellung einer zweiten Geräteeinbaueinheit, insbesondere geeignet für Schwachstrom-Installationsgeräte, mit montierter RJ 45-Doppelsteckdose und
- Fig. 8: eine perspektivische Darstellung einer dritten Geräteeinbaueinheit, ebenfalls für Schwachstrom-Installationsgeräte, mit montiertem Elektro-Installationsgerät.

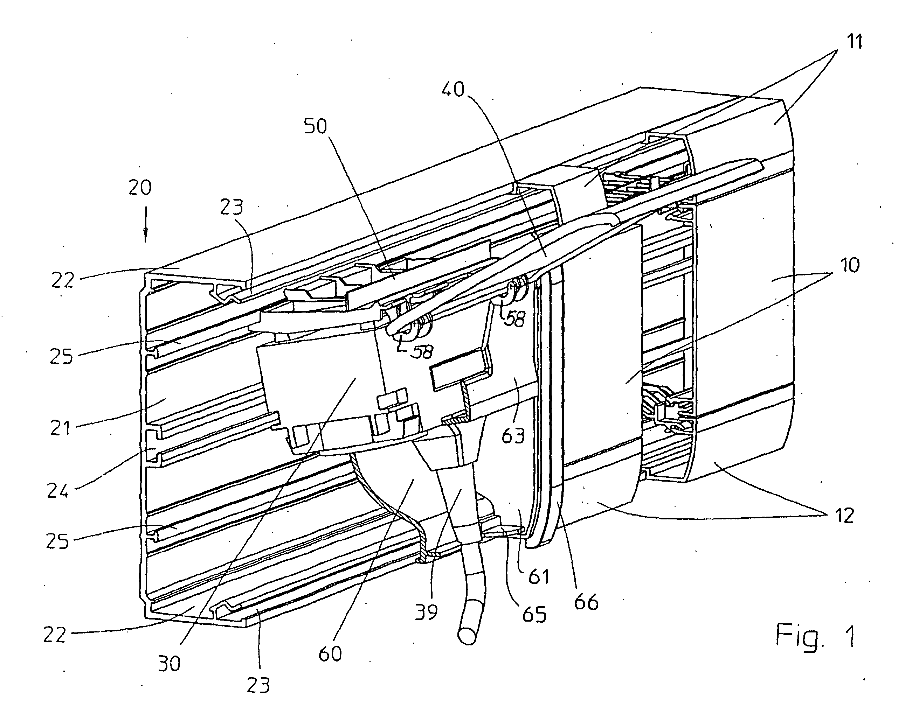

Fig. 1 zeigt in perspektivischer Darstellung ein Unterteil 20 eines Geräteeinbaukanals. Dieses umfasst einen Boden 21 und zwei Seitenwände 22 mit je einem Deckelverschlussprofil 23. An der Innenseite des Bodens 21 erkennt man eine C-förmige Halteleiste 24 sowie zwei T-förmige Halteleisten 25.

Die offene Vorderseite des Kanalunterteils 20 wird durch drei Deckel 10, 11, 12 verschlossen.

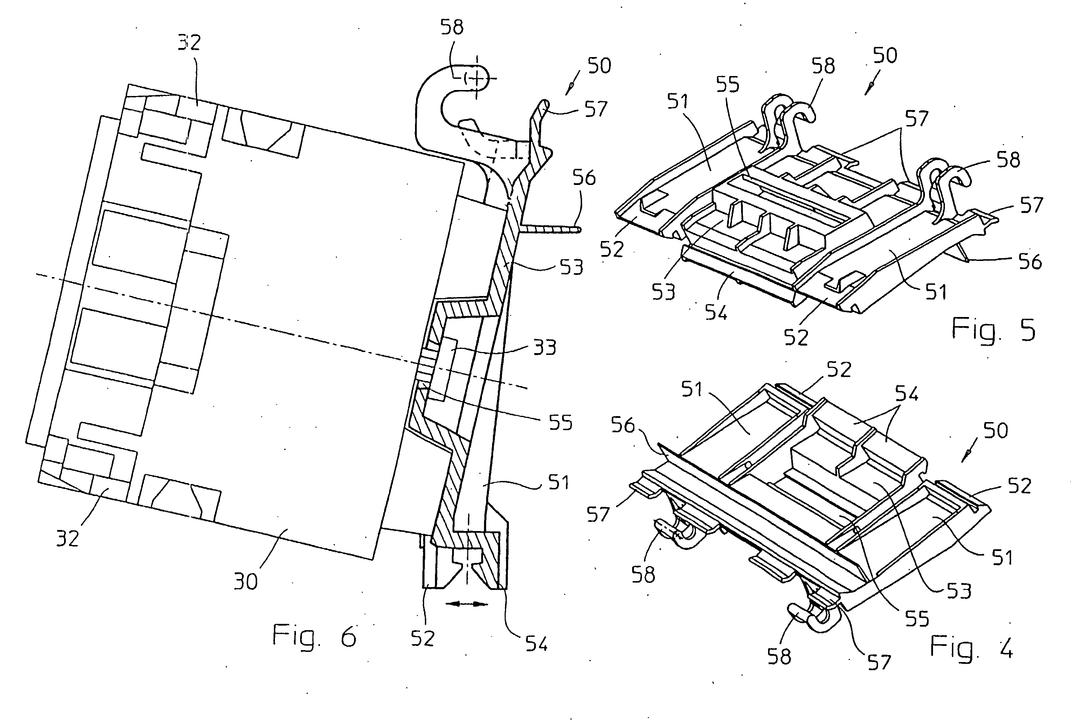

Im Inneren des Kanalunterteils 20 ist an der oberen T-förmigen Halteleiste 25 ein Multifunktionshalter 50 befestigt. Einzelheiten des Multifunktionshalters 50 werden anhand der Fig. 4 bis 6 erläutert. Am Kopf des Multifunktionshalters befinden sich Scharniere 58, an denen ein Klappdeckel 40 angelenkt ist. Die Front des Multifunktionshalters 50 ist leicht schräg gestellt, so dass auch die Front eines daran befestigten Elektroinstallationsgerätes 30, hier eine Doppelsteckdose, ebenfalls bedienungsfreundlich schräg gestellt ist. Ansonsten befindet sich das Elektroinstallationsgerät 30 komplett innerhalb des von Kanalunterteil 20 und den. Deckeln 10, 11, 12 umschlossenen Kanal-Innenraums.

Zur Abgrenzung des von außen zugänglichen Raums im Bereich des Elektroinstallationsgerätes 30 ist an diesem eine Abdeckmulde 60 angeclipst. Die Mulde 60 besitzt an ihrem unteren Rand eine Begrenzungsleiste 65 mit Ausschnitten für ein Steckerkabel 39. Außerdem besitzt die Mulde 60 zwei abnehmbare Seitenwände 61 mit angeformter Schnittkaschierung 66, die die angrenzenden Deckel 10, 11, 12 übergreift und so den Stoß kaschiert.

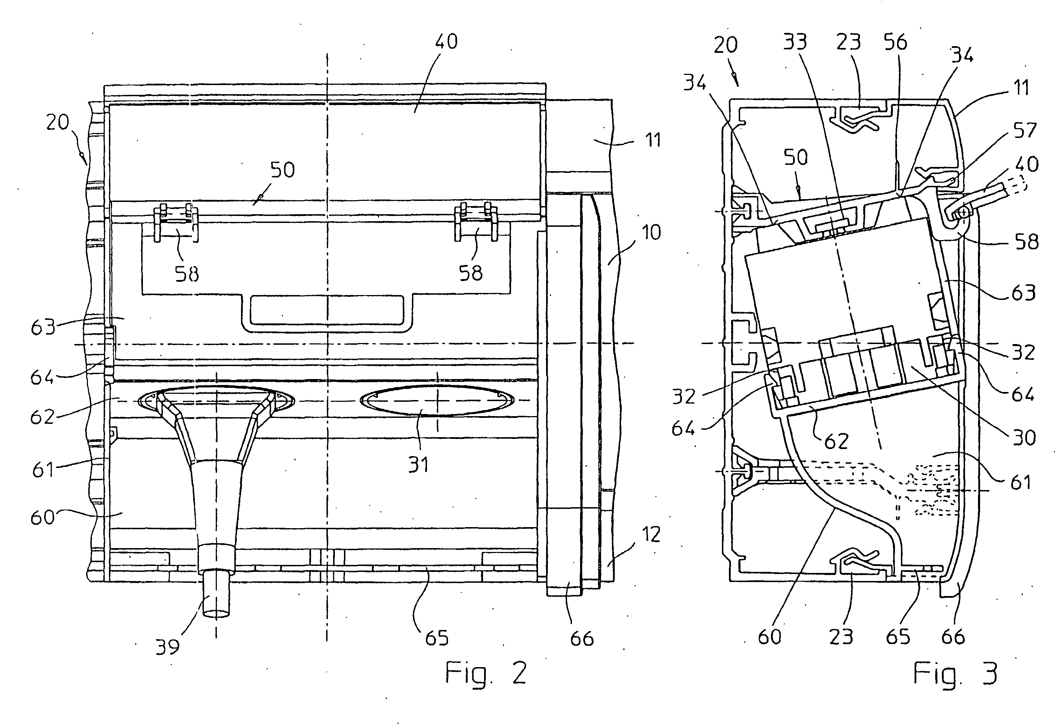

Die Fig. 2 und 3 zeigen Geräteeinbaukanal 20 und Elektroinstallationsgerät 30 als Frontsicht bzw. als Seitenansicht. Der Klappdeckel 40 ist geöffnet und gibt den Blick in das von der Mulde 60 und deren Seitenwände 61 begrenzte Innere des Kanalunterteils 20 frei.

Fig. 2 zeigt die leicht schräg nach vome weisende Front des Elektroinstallationsgerätes bzw. des Frontteils 62 der Mulde 60 mit den Steckertöpfen 31 des Elektroinstallationsgerätes 30.

Wie insbesondere Fig. 3 erkennen lässt, befinden sich am Kopf des Multifunktionshalters 50 Deckelschamiere 58, die mit dem Klappdeckel 40 korrespondieren. Des weiteren erkennt man eine Kabelrückhalteleiste 56. Diese verhindert, dass bei abgenommenem Deckel 11 bereits eingelegte Kabel herausfallen können.

Die Befestigung der Mulde 60, 62 am Elektroinstallationsgerät 30 erfolgt mit Hilfe von Rastnasen 64, die mit entsprechenden Rastvertiefungen 32 am Elektroinstallationsgerät 30 korrespondieren.

Die Fig. 4 und 5 zeigen in perspektivischer Darstellung die Vorderseite bzw. Rückseite des Multifunktionshalters 50. Der Multifunktionshalter 50 besitzt zwei Fixteile 51 mit Füßen 52 und ein Federteil 53 mit Fuß 54. Die Füße 52, 54 korrespondieren nach Art einer Zange mit der Halteleiste 25 am Boden 21 des Kanalunterteils 20.

Am Kopf des Multifunktionshalters 50 erkennt man die Scharniere 58 für den Klappdeckel 40 sowie Deckelhalteprofile 57, die mit den Kanaldeckeln 10, 11, 12 korrespondieren.

Zur lösbaren Befestigung des Installationsgerätes 30 dient ein Langschlitz 55, in den ein am Boden des Installationsgerätes vorgesehener Riegel eingreift.

Fig. 6 zeigt in vergrößerter Darstellung einen Querschnitt durch den Multifunktionshalter 50 im Bereich des Federteils 53. Man erkennt die nach Art einer Zange kooperierenden Füße 52, 54 von Fixteil 51 und Federteil 53. Man erkennt weiterhin den Langschlitz 55, in den das Riegelelement 33 am Boden des Installationsgerätes 30 eingesetzt und verrastet ist. Das Installationsgerät 30 stützt sich sowohl gegen die Fixteile 51 als auch gegen das Federteil 53 ab, so dass das Federteil 53 blockiert und der Multifunktionshalter 50 unverrückbar an der T-förmigen Halteleiste 52 fixiert ist.

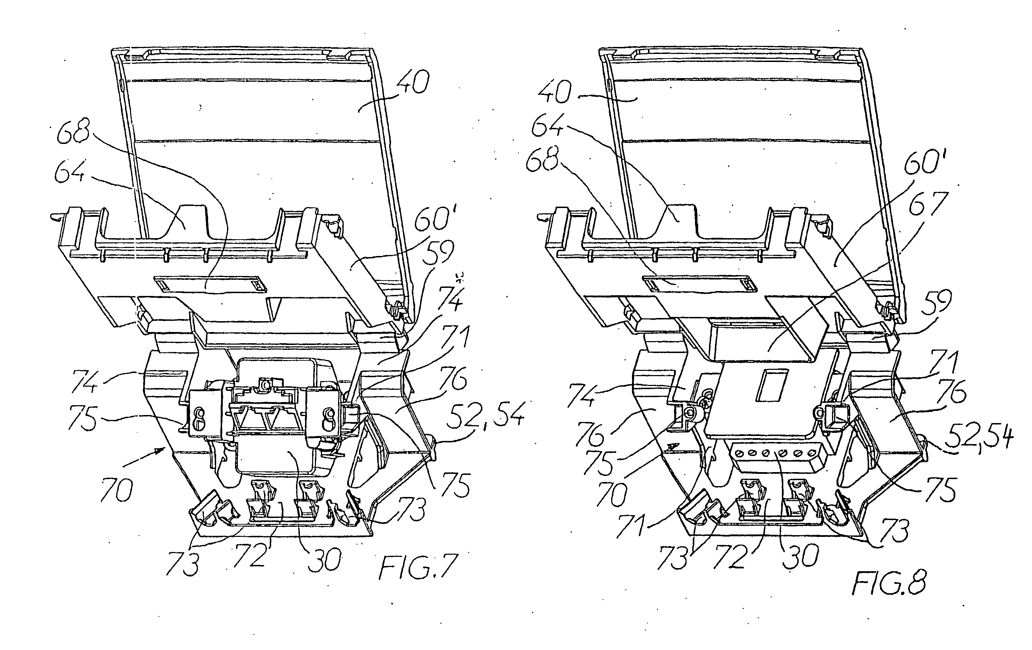

Fig. 7 zeigt in perspektivischer Darstellung eine zweite Geräteeinbaukombination, bestehend aus Multifunktionshalter mit einstückig angeformter Geräteeinbaudose 70, hier ohne Vorderwand, bestimmt für den Einbau eines Schwachstrom-Installationsgerätes 30 in Form einer RJ 45-Doppelsteckdose, einer klappbar angelenkten Abdeckmulde 60' und einem Klappdeckel 40.

Die Geräteeinbaudose 70 besitzt zwei Seitenwände 71 und einen Boden 72. Rechts und links sind an den Seitenwänden 71 spezielle Schürzen 76 angeformt, die den Multifunktionshalter überdecken.

Das Elektro-Installationsgerät 30 ist an Konsolen 75 befestigt, die an den Seitenwänden 71 der Dose 70 so angebracht sind, dass die Front des Installationsgerätes 30 einen Winkel zum Boden 72 der Dose einnimmt, wodurch der Zugang zu den Funktionsteilen des Gerätes 30 erleichtert wird.

Die Mulde 60' ist an Scharnieren 59 angelenkt. Sie besitzt eine zentrale Öffnung, die den Zugang zu den Funktionselementen des Installationsgerätes 30 ermöglicht. Außerdem besitzt sie einen Ausschnitt 68, der die sichtbare Anbringung eines Kennzeichenschildes ermöglicht

Führungen und Halterungen 73 am Boden 72 der Dose 70 dienen der Führung und Fixierung der elektrischen Kabel und Leitungen zum und vom Installationsgerät 30.

Fig. 8 zeigt in einer vergleichbaren perspektivischen Darstellung eine dritte Gerätekombination. Als Installationsgerät 30 ist in der Geräteeinbaudose 70 eine Einfach-Telekommunikationssteckdose vorgesehen. Diese ist an zweiten Konsolen (nicht sichtbar) angeschraubt, die so angeordnet sind, dass die Front des Installationsgerätes 30 parallel zum Boden 72 der Dose 70 orientiert ist.

## Patentansprüche

1. Gerätekombination zum Einbau eines Elektroinstallationsgerätes (30) in einen Geräteeinbaukanal (10, 20), im wesentlichen umfassend
- ein Unterteil (20) mit
-- einem Boden (21),
-- zwei Seitenwänden (22),
-- Deckelverschlussprofile (23), die eine offene Vorderseite begrenzen,
-- und Halteleisten (24, 25) an der Innenseite des Bodens (21),
- wenigstens einen Deckel (10, 11, 12), lösbar zu befestigen an den Deckelverschlussprofilen (23),
- und eine das Gerät (30) abdeckende bewegliche Klappe (40), **gekennzeichnet durch**
- einen Multifunktionshalter (50) mit
-- wenigstens einem Fixteil (51) mit Fuß (52),
-- wenigstens einem Federteil (53) mit Fuß (54)
-- und wenigstens einem Halteelement (55), an dem das Installationsgerät (30) lösbar zu befestigen ist,
--- die Füße (52, 54) korrespondieren nach Art einer Zange mit einer der Halteleiste (25),
- und eine Abdeckmulde (60, 60'),
-- korrespondierend mit dem Installationsgerät (30) und dem Kanalunterteil (20)
-- und den den Benutzern zugänglichen Kanalteil im Bereich des Installationsgerätes (30) und des Kanalunterteils (20) begrenzend.

2. Gerätekombination nach Anspruch 1, **gekennzeichnet durch**
- ein Deckelhalteprofil (57) am Kopf des Multifunktionshalters (50).

3. Gerätekombination nach Anspruch 1 oder 2, **gekennzeichnet durch**
- mit dem Klappdeckel (40) und/oder der Mulde (60, 60') korrespondierende Scharniere (58, 59) am Kopf des Multifunktionshalters (50).

4. Gerätekombination nach einem der Ansprüche 1 bis 3, **gekennzeichnet durch**
- eine Kabelrückhalteleiste (56) am Multifunktionshalter (50).

5. Gerätekombination nach einem der Ansprüche 1 bis 4, **gekennzeichnet durch**
- abnehmbare Seitenwände (61) an der Mulde (60, 60').

6. Gerätekombination nach einem der Ansprüche 1 bis 5, **gekennzeichnet durch**
- Schnittkaschierungen (65) an der Mulde (60), die angrenzende Deckel (10, 11, 12) überdecken.

7. Gerätekombination nach einem der Ansprüche 1 bis 6, **gekennzeichnet durch**
- eine Begrenzungsleiste (64) an der Mulde (60, 60') mit Ausschnitten für Steckerkabel (39).

8. Gerätekombination nach einem der Ansprüche 1 bis 7, **gekennzeichnet durch**
- eine Schrägstellung der Front des Installationsgerätes (30) bzw. des Multifunktionshalters (50).

9. Gerätekombination nach einem der Ansprüche 1 bis 8, **gekennzeichnet durch**
- einen Langschlitz als Halteelement (55),
- der Langschlitz korrespondiert mit einem Riegelelement (33) am Boden des Installationsgerätes (30).

10. Gerätekombination nach einem der Ansprüche 1 bis 9, **gekennzeichnet durch**
- Auflageflächen am Fixteil (51) des Multifunktionshalters (50), auf denen sich das Installationsgerät (30) abstützt

11. Gerätekombination nach einem der Ansprüche 1 bis 10, **gekennzeichnet durch**
- Rastvertiefungen (32) am installationsgerät (30)
- und damit korrespondierende Rastnasen (64) an der Mulde (60, 60').

12. Gerätekombination nach wenigstens einem der Ansprüche 1 bis 8, **gekennzeichnet durch**
- eine Geräteeinbaudose (70), die einstückig am Multifunktionshalter (50) angeformt ist.

13. Gerätekombination nach Anspruch 12, **gekennzeichnet durch**
- eine Geräteeinbaudose (70) ohne Vorderwand.

14. Gerätekombination nach Anspruch 12 oder 13, **gekennzeichnet durch**
- eine Mulde (60'), die auch das Installationsgerät (30) überdeckt,
- und eine Öffnung (67) in der Mulde (60'), die den Zugang zu den Funktionsteilen des Installationsgerätes (30) freigibt.

15. Gerätekombination nach einem der Ansprüche 12 bis 14, **gekennzeichnet durch**
- erste Konsolen am Boden (72) der Geräteeinbaudose (70), die eine Schraubbefestigung des Installationsgerätes (30) parallel zum Boden (72) ermöglichen,
- und zweite Konsolen (75) an den Seitenwänden (71) der Geräteeinbaudose (70), die eine Schraubbefestigung des Installationsgerätes (30) im Winkel zum Boden (72) ermöglichen.

16. Gerätekombination nach einem der Ansprüche 12 bis 15, **gekennzeichnet durch**
- Schlitze in den Seitenwänden (71) der Geräteeinbaudose (70), die eine Befestigung des Installationsgerätes (30) nach Art eines Bajonetts ermöglichen.

17. Gerätekombination nach einem der Ansprüche 12 bis 16, **gekennzeichnet durch**
- seitlich an den Seitenwänden (71 ) der Dose (70) angeformte Schürzen (76).

18. Gerätekombination nach einem der Ansprüche 12 bis 17, **gekennzeichnet durch**
- Führungen und Halterungen (73) für Kabel und Leitungen am Boden (72) der Dose (70).

19. Gerätekombination nach einem der Ansprüche 12 bis 18, **gekennzeichnet durch**
- einen Ausschnitt (68) für ein Kennzeichen in der Mulde (60').

20. Gerätekombination nach einem der Ansprüche 12 bis 19, **gekennzeichnet durch**
- identische Breiten von Klappdeckel (40) und Mulde (60, 60').

## Claims

1. Device combination for the installation of an electrical installation device (30) in device installation trunking (10, 20), essentially comprising
- a lower part (20) with
-- a bottom (21),
-- two side walls (22),
-- lid closure profiles (23), which bound an open front side,
-- and retaining strips .(24, 25) at the inside of the bottom (21),
- at least one lid (10, 11, 12), which is to be detachably fastened to the lid closure profiles (23),
- and a mobile cap (40), which covers the device (30), **characterised by**
- a multifunction holder (50) with
-- at least one fixed part (51) with a foot (52),
-- at least one spring part (53) with a foot (54)
-- and at least one retaining element (55), to which the installation device (30) is to be detachably fastened,
--- the feet (52, 54) correspond like tongs with one of the retaining strips (25),
- and a covering trough (60, 60'),
-- corresponding with the installation device (30) and the trunking lower part (20)
-- and bounding the trunking part which is accessible to the users in the region of the installation device (30) and the trunking lower part (20).

2. Device combination according to Claim 1, **characterised** b-
- a lid retaining profile (57) at the top of the multifunction holder (50).

3. Device combination according to Claim 1 or 2, **characterised by**
- hinges (58, 59), which correspond with the hinged cap (40) and/or the trough (60, 60'), at the top of the multifunction holder (50).

4. Device combination according to any one of Claims 1 to 3, **characterised by**
- a cable retention strip (56) at the multifunction holder (50) .

5. Device combination according to any one of Claims 1 to 4, **characterised by**
- removable side walls (61) at the trough (60, 60').

6. Device combination according to any one of Claims 1 to 5, **characterised by**
- sectional coverings (65) at the trough (60), which coverings cover adjacent lids (10, 11, 12).

7. Device combination according to any one of Claims 1 to 6, **characterised by**
- a boundary strip (64) at the trough (60, 60') with cut-outs for plug-in cables (39).

8. Device combination according to any one of Claims 1 to 7, **characterised by**
- an oblique position of the front of the installation device (30) or of the multifunction holder (50).

9. Device combination according to any one of Claims 1 to 8, **characterised by**
- an elongate slot as retaining element (55),
- the elongate slot corresponds with an interlock element (33) at the bottom of the installation device (30).

10. Device combination according to any one of Claims 1 to 9, **characterised by**
- bearing surfaces at the fixed part (51) of the multifunction holder (50), on which surfaces the installation device (30) is supported.

11. Device combination according to any one of Claims 1 to 10, **characterised by**
- locking recesses (32) at the installation device (30)
- and locking lugs (64), corresponding with the recesses, at the trough (60, 60').

12. Device combination according to at least one of Claims 1 to 8, **characterised by**
- a device installation box (70), which is integrally moulded onto the multifunction holder (50).

13. Device combination according to Claim 12, **characterised by**
- a device installation box (70) without a front wall.

14. Device combination according to Claim 12 or 13, **characterised by**
- a trough (60'), which also covers the installation device (30),
- and an opening (67) in the trough (60') to provide access to the functional parts of the installation device (30) .

15. Device combination according to any one of Claims 12 to 14, **characterised by**
- first brackets at the bottom (72) of the device installation box (70), which brackets enable the installation device (30) to be fastened by screws parallel to the bottom (72),
- and second brackets (75) at the side walls (71) of the device installation box (70), which brackets enable the installation device (30) to be fastened by screws at an angle to the bottom (72).

16. Device combination according to any one of Claims 12 to 15, **characterised by**
- slots in the side walls (71) of the device installation box (70), which slots enable the installation device (30) to be fastened like a bayonet coupling.

17. Device combination according to any one of Claims 12 to 16, **characterised by**
- aprons (76) moulded laterally onto the side walls (71) of the box (70) .

18. Device combination according to any one of Claims 12 to 17, **characterised by**
- guides and supports (73) for cables and lines at the bottom (72) of the box (70).

19. Device combination according to any one of Claims 12 to 18, **characterised by**
- a cut-out (68) for an identification in the trough (60').

20. Device combination according to any one of Claims 12 to 19, **characterised by**
- identical widths of hinged cap (40) and trough (60, 60').

## Revendications

1. Combinaison d'appareils pour l'encastrement d'un appareil d'installation électrique (30) dans une goulotte d'installation électrique (10, 20), comprenant pour l'essentiel
- une partie inférieure (20) comportant
- un fond (21),
- deux parois latérales (22),
- des profilés de fermeture de couvercle (23) qui limitent une face avant ouverte
- et des rails de fixation (24, 25) sur la face intérieure du fond (21)
- au moins un couvercle (10, 11, 12) à fixer de manière amovible sur les profilés de fermeture de couvercle (23)
- et un couvercle rabattant mobile (40) recouvrant l'appareil (30),
**caractérisée par**
- un support multifonction (50) comportant
- au moins une partie fixe (51) avec pied (52),
- au moins une partie élastique (53) avec pied (54)
- et au moins un élément de support (55) sur lequel l'appareil d'installation (30) peut être fixé de manière amovible,
-- les pieds (52, 54) correspondant à la manière d'une pince à l'un des rails de fixation (25),
- et un cache incurvé (60, 60')
- correspondant à l'appareil d'installation (30) et à la partie inférieure de goulotte (20)
- et limitant la partie de la goulotte accessible aux utilisateurs au niveau de l'appareil d'installation (30) et de la partie inférieure de goulotte (20).

2. Combinaison d'appareils selon la revendication 1, **caractérisée par**
- un profilé de support de couvercle (57) sur la tête du support multifonction (50).

3. Combinaison d'appareils selon la revendication 1 ou 2, **caractérisée par**
- des charnières (58, 59) correspondant au couvercle rabattant (40) et/ou au cache incurvé (60, 60') sur la tête du support multifonction (50).

4. Combinaison d'appareils selon l'une des revendications 1 à 3, **caractérisée par**
- une moulure ou un rebord de retenue de câble (56) sur le support multifonction (50).

5. Combinaison d'appareils selon l'une des revendications 1 à 4, **caractérisée par**
- des parois latérales amovibles (61) sur le cache incurvé (60, 60').

6. Combinaison d'appareils selon l'une des revendications 1 à 5, **caractérisée par**
- des couvre-joints (66) sur le cache incurvé (60) qui recouvrent les couvercles (10, 11, 12) adjacents.

7. Combinaison d'appareils selon l'une des revendications 1 à 6, **caractérisée par**
- une moulure de limitation (65) sur le cache incurvé (60, 60') avec des découpes pour des câbles de fiches (39).

8. Combinaison d'appareils selon l'une des revendications 1 à 7, **caractérisée par**
- une inclinaison de la face avant de l'appareil d'installation (30) ou du support multifonction (50).

9. Combinaison d'appareils selon l'une des revendications 1 à 8, **caractérisée par**
- une fente longue comme élément de support (55),
- la fente longue correspondant à un élément de verrouillage (33) sur le fond de l'appareil d'installation (30).

10. Combinaison d'appareils selon l'une des revendications 1 à 9, **caractérisée par**
- des surfaces d'appui sur la partie fixe (51) du support multifonction (50) sur lesquelles l'appareil d'installation (30) s'appuie.

11. Combinaison d'appareils selon l'une des revendications 1 à 10, **caractérisée par**
- des évidements d'arrêt (32) sur l'appareil d'installation (30),
- et des ergots d'arrêt (64) correspondants sur le cache incurvé (60, 60').

12. Combinaison d'appareils selon au moins une des revendications 1 à 8, **caractérisée par**
- une prise encastrée (70) qui est formée en une pièce sur le support multifonction (50).

13. Combinaison d'appareils selon la revendication 12, **caractérisée par**
- une prise encastrée (70) sans panneau avant.

14. Combinaison d'appareils selon la revendication 12 ou 13, **caractérisée par**
- un cache incurvé (60') qui recouvre aussi l'appareil d'installation (30),
- et une ouverture (67) dans le cache incurvé (60') qui donne accès aux parties fonctionnelles de l'appareil d'installation (30).

15. Combinaison d'appareils selon l'une des revendications 12 à 14, **caractérisée par**
- des premières consoles sur le fond (72) de la prise encastrée (70) qui permettent une fixation par vis de l'appareil d'installation (30) parallèlement au fond (72),
- et des deuxièmes consoles (75) sur les parois latérales (71) de la prise encastrée (70) qui permettent une fixation par vis de l'appareil d'installation (30) à un angle par rapport au fond (72).

16. Combinaison d'appareils selon l'une des revendications 12 à 15, **caractérisée par**
- des fentes dans les parois latérales (71) de la prise encastrée (70) qui permettent une fixation de l'appareil d'installation (30) à la manière d'une baïonnette.

17. Combinaison d'appareils selon l'une des revendications 12 à 16, **caractérisée par**
- des jupes formées latéralement sur les parois latérales (71) de la prise (70).

18. Combinaison d'appareils selon l'une des revendications 12 à 17, **caractérisée par**
- des guides et des fixations (73) pour des câbles et des lignes sur le fond (72) de la prise (70).

19. Combinaison d'appareils selon l'une des revendications 12 à 18, **caractérisée par**
- une découpe (68) dans le cache incurvé (60') pour une identification.

20. Combinaison d'appareils selon l'une des revendications 12 à 19, **caractérisée par**
- des largeurs identiques du couvercle rabattant (40) et du cache incurvé (60, 60').
